**Europäisches Patentamt**

**European Patent Office**

**Office européen des brevets**

(19)

(11) Veröffentlichungsnummer : **0 466 634 A1**

(12) **EUROPÄISCHE PATENTANMELDUNG**

(21) Anmeldenummer : **91810403.5**

(22) Anmeldetag : **29.05.91**

(51) Int. Cl.⁵ : **G01C 17/04,** G01C 9/36

(30) Priorität : **13.07.90 CH 2358/90**

(43) Veröffentlichungstag der Anmeldung :
**15.01.92 Patentblatt 92/03**

(84) Benannte Vertragsstaaten :
**AT DE FR GB**

(71) Anmelder : **RECTA AG**
**Viaduktstrasse 3**
**CH-2501 Biel (CH)**

(72) Erfinder : **Vorpe, Gilbert**
**Gerberweg 51**
**CH-2560 Nidau (CH)**

(54) **Kompass und Kompassvorrichtung.**

㊼ Der Kompass (1) ist kombiniert mit einem Neigungsanzeiger, der aus einer Wasserwaage besteht. Damit die abgelesene Neigung definiert ist, ist der obere Innenraum (8) z.B. bombiert, damit sich die Gasblase (6)bei der Massung ruhig verhält und einen bestimmten Wert der Neigung angeben kann. Bei der Abbildung ist der Kompass (1) mit einer Lupe (2) und einem Thermometer (3) kombiniert.

EP 0 466 634 A1

Fig 1

Fig 2

Die vorliegende Erfindung betrifft einen Kompass mit einer, in einem Flüssigkeit enthaltenen Gehäuse drehbaren magnetischen Nadel oder Scheibe und einer Kompassvorrichtung.

Die Magnetnadel eines mechanischen Kompasses bewegt sich auf einem Spitzenlager. Damit die Ablesung der Magnetfeldrichtung möglichst genau ist, muss der Kompass möglichst exakt während der Messung in der horizontalen Lage gehalten werden, da das Erdmagnetfeld nicht tangential zur Erde verläuft, sondern in einem Winkel, der von Ort zu Ort verschieden ist. Damit der Kompass möglichst einfach zu gebrauchen ist, ist es von einem grossen Vorteil, wenn man beim Ablesen gleichzeitig die Magnetfeldrichtung und die Lage des Kompasses ablesen kann. Nach der Erfindung wird diese Bedingung bestens erfüllt, dadurch dass die Flüssigkeit das Gehäuse nicht voll ausfüllt, derart, dass dadurch eine gasgefüllte Blase entsteht, die als Wasserwaage die Neigung des Kompasses anzeigt.

Die Blase kann mit Luft oder einem inerten Gas gefüllt sein.

Damit die Neigung des Kompassen genau bestimmbar ist, kann der innere obere Teil des Gehäuses eine konvexe Form aufweisen. Diese Form kann elliptisch, konisch, kreisförmig usw. sein.

Damit der Kompass handlich zu bedienen ist, ist es von Vorteil, ihn auf ein Trägerelement zu montieren.

Auf dem Trägerelement kann ein Massstab in cm, inch oder einem kartographischen Massstab, um auf einer Karte, die z.B. in einem Massstab von 1:25000 gezeichnet ist, eine Distanz abzulesen, aufgebracht sein. Zusätzlich auf dem Trägerelement können noch andere Einrichtungen vorhanden sein, wie ein Thermometer, eine Lupe, einen Barometer oder ein anderes Messinstrument.

Es ist von Vorteil, wenn das Trägerelement aus einem durchsichtigen Kunststoff hergestellt ist und eine rechteckige Form hat.

Die Erfindung wird schematisch durch eine Zeichnung dargestellt.

So stellt:

Fig 1 einen Kompass in Aufsicht und

Fig 2 einen Kompass im Schnitt dar

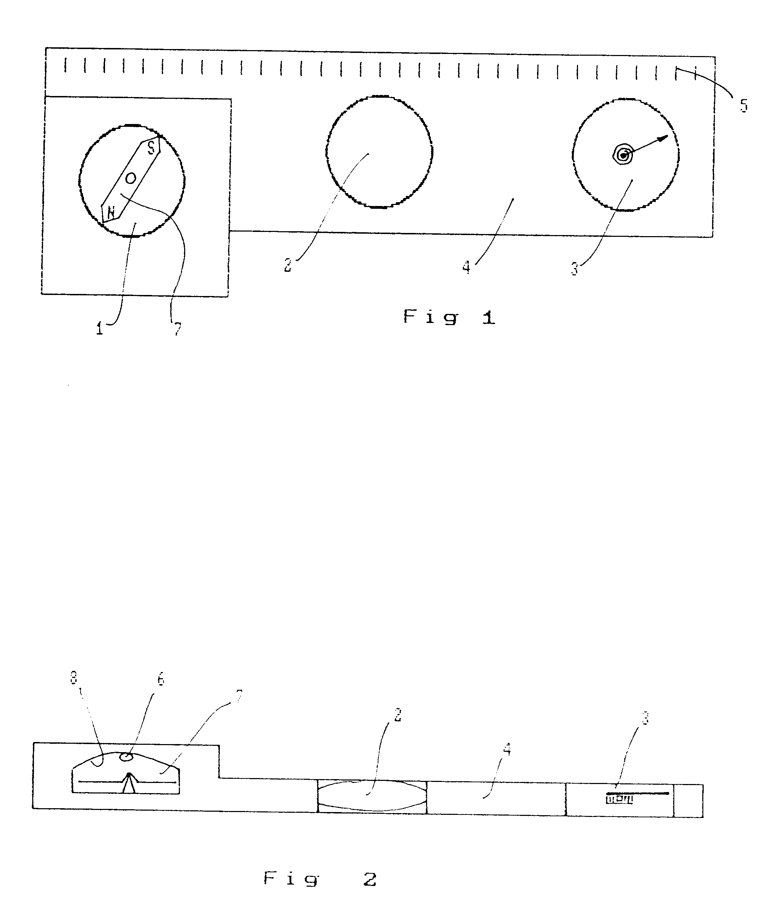

Die Figur 1 stellt ein Trägerelement 4 dar, auf dem beispielsweise ein Kompass 1 mit seiner Magnetnadel 7, eine Lupe 2 und ein Thermometer 3 montiert sind. Zudem ist noch ein Massstab 5 vorhanden, der erlaubt eine Distanz zu messen.

Die Figur 2 zeigt im Schnitt das Trägerelement 4, den Thermometer 3, die Lupe 2 sowie den Kompass 1. Dieser besteht aus einer Kompassnadel 7 mit seiner Aufhängung. Der Innenraum des Kompasses, der grösstenteils mit einer Flüssigkeit gefüllt ist, ist so konstruiert, dass der obere Innenteil 8 gewölbt ist. Dadurch ist es möglich, dass die Gasblase 6 mit einer guten Auflösung die Neigung des Kompasses anzeigt.

**Patentansprüche**

1. Kompass mit einer, in einem Flüssigkeit enthaltenen Gehäuse drehbaren magnetischen Nadel oder Scheibe, dadurch gekennzeichnet, dass die Flüssigkeit das Gehäuse nicht voll ausfüllt, derart, dass dadurch eine gasgefüllte Blase entsteht, die als Wasserwaage die Neigung des Kompasses anzeigt.

2. Kompass nach Anspruch 1, dadurch gekennzeichnet, dass die Blase mit Luft gefüllt ist.

3. Kompass nach Anspruch 1 oder 2, dadurch gekennzeichnet, dass der innere obere Teil des Gehäuses eine konische, elliptische, kreisförmige oder irgendeine konvexe Form aufweist, damit die Neigung des Gehäuses durch die Lage der Blase bestimmbar ist.

4. Kompassvorrichtung mit einem Kompass nach einem der Ansprüche 1 bis 3, dadurch gekennzeichnet, dass die Vorrichtung ein Trägerelement ist, auf dem der Kompass montiert ist.

5. Vorrichtung nach Anspruch 4, dadurch gekennzeichnet, dass das Trägerelement ein Massstab ist.

6. Vorrichtung nach Anspruch 4 oder 5, dadurch gekennzeichnet, dass sich der Kompass an einer Extremität des Trägerelements befindet.

7. Vorrichtung nach einem der Ansprüche 4 bis 6, dadurch gekennzeichnet, dass zusätzlich zum Kompass noch andere Einrichtungen auf dem Massstab vorhanden oder integriert sind, wie Thermometer, Lupe, Barometer oder andere Messinstrumente.

8. Vorrichtung nach einem der Ansprüche 4 bis 7, dadurch gekennzeichnet, dass das Trägerelement aus Kunststoff ist und durchsichtig ist.

9. Vorrichtung nach einem der Ansprüche 4 bis 8, dadurch gekennzeichnet, dass das Trägerelement eine rechteckige Form hat.

Fig 1

Fig 2

Europäisches
Patentamt

# EUROPÄISCHER RECHERCHENBERICHT

Nummer der Anmeldung

EP    91 81 0403

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 635 371 (DALRYMPLE) | 1-4 | G01C17/04 |
| Y | * Spalte 2, Zeile 46 – Zeile 55; Abbildung 3 * | 5-7,9 | G01C9/36 |
| | --- | | |
| Y | DE-U-8 521 533 (METEREX KARL KUNTZE GMBH & CO) | 5-7,9 | |
| | * Abbildungen 1,2 * | | |
| | ----- | | |

RECHERCHIERTE SACHGEBIETE (Int. Cl.5)

G01C
G01B

Der vorliegende Recherchenbericht wurde für alle Patentansprüche erstellt

| Recherchenort | Abschlußdatum der Recherche | Prüfer |
|---|---|---|
| DEN HAAG | 10 OCTOBER 1991 | HOEKSTRA F.R. |

EPO FORM 1503 03.82 (P0403)